# EUROPEAN PATENT APPLICATION

(11) **EP 4 819 420 A1**
(43) Date of publication of application: **07.10.2026**
(21) Application number: 26169963.1
(22) Date of filing: 31.03.2026
(51) Int. Cl.: H02G 1/04, B65G 39/04

(54) **APPARATUS FOR OVERHEAD CONDUCTOR REPLACEMENT**

(30) Priority: 02.04.2025 GB 202504953
(71) Applicant: Slingco Limited, Rawtenstall Rossendale BB4 6JG (GB)
(72) Inventor: MOSLEY, Jem Howard, Rawtenstall, BB4 6JG (GB)
(74) Representative: Mewburn Ellis LLP

(57) **Abstract**

There is provided an apparatus for overhead conductor replacement including a housing and a necklace. The necklace is deployed in use to encapsulate multiple conductors. In use, the housing is used to string out each apparatus across the conductor span between two towers in a similar known manner to the existing art. With the necklace encapsulating the conductors, a header can be attached to join and pull through the conductor or the multiple conductors in a single operation. Whilst being pulled through the apparatuses, the conductors are supported by the necklace. If necessary, the necklace aids the recovery of broken conductors. In the broadest form there is therefore provided a necklace comprising a cable and a plurality of bearings and being attached to the housing in a loop between a first and a second attachment point to the housing. At least one of the first and second attachment points is releasable such that the necklace can be attached and detached from the housing to encapsulate the conductors.

## Description

### Field of the Invention

The present invention relates to apparatus for use during the maintenance of overhead line (OHL) equipment and particularly, although not exclusively, to apparatus for use when replacing an overhead conductor in OHL equipment.

### Background

With increasingly stringent regulations, maintenance can be costly, time-consuming and challenging for the overhead line (OHL) industry - not least because there is a growing number of projects built beneath existing transmission and distribution networks. Consequently, there is a need to complete maintenance operations from OHL towers in order to reduce the need for erection and dismantling of scaffolding - cutting down the risk of accidents and harm to site workers.

Various apparatuses are known for being deployed from towers when replacing a conductor in overhead line (OHL) equipment. GB2535446 discloses an apparatus for replacing a conductor that is known in the industry under the trade name CatchBlock TM. CatchBlock CB comprises an overhead conductor replacement apparatus, comprising: a first grip G1, a second grip G2 and an encapsulating aperture A. The first grip G1 is configured to grip a portion of a first rope R1 in order to maintain the apparatus at a position on the first rope. Likewise, the second grip G2 is configured to grip a portion of a second rope R2 in order to maintain a position of the apparatus on the second rope when a force is applied to the second rope in a first direction, and configured to enable the second rope to move relative to the second grip when a force is applied to the second rope in a second direction, different from the first direction. The encapsulating aperture A enables the apparatus to be supported by an overhead conductor C during deployment and to act as a guide when pulling through a replacement conductor. An exemplary embodiment of CatchBlock is shown in Figure 1 and GB2535446 is herein incorporated by reference.

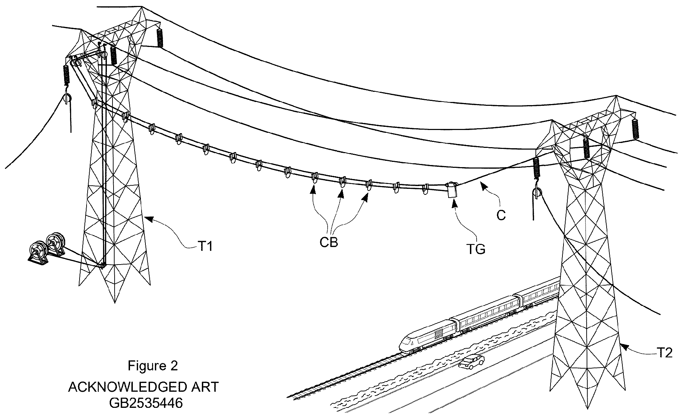

In use, a tractor unit TG is installed on the existing conductor from a first tower T1. The tractor unit is used to pull the CatchBlocks across the conductor to the opposed second tower and such that a plurality of CatchBlocks are strung apart along the conductor between the towers T1, T2. Figure 2 shows CatchBlocks strung between two towers. Each CatchBlock is deployed on the conductor from the first tower. Here, a first CatchBlock is placed into an open configuration with a portion of the second rope inserted into the second grip. Next, a portion of the overhead conductor is arranged within the aperture, and the CatchBlock is closed to encapsulate the conductor in the opening. A portion of the first rope is then positioned in the first grip. As the tractor unit pulls the CatchBlocks across the conductor, second and subsequent CatchBlock units are installed on the conductor and the first and the second ropes. Once the CatchBlocks are in position, the first and second ropes are tensioned, causing the CatchBlocks to be supported by the first and second ropes rather than the conductor. The overhead conductor may then be replaced by attaching a new conductor to one end of the conductor and pulling the conductor through the CatchBlocks until the replacement conductor is positioned in its place between the first and second towers. If the conductor severs, the conductor can be recovered and the CatchBlocks pulled in and redeployed with a new conductor using the first and second ropes.

CatchBlock has proven to reduce the need for scaffolding by increasing the ease of deployment from the towers. The ability to recover and redeploy conductors, results in a faster, more efficient operation. With fewer hours of effort and less equipment required, Catch Block has delivered substantially reduced costs when replacing single conductors.

OHL equipment can include multiple conductors between the towers and it would be advantageous to therefore provide an apparatus able to replace multiple conductors at the same time. The present invention has been devised in light of the above considerations.

### Summary of the Invention

There is provided an apparatus including a housing and a necklace. The necklace is deployed in use to encapsulate one or more conductors. But as explained above, in the preferred embodiments, multiple conductors can be encapsulated. For instance, the necklace can be structured and sized to be deployed so that four conductors can be encapsulated. Consequently, whilst herein the exemplary embodiments will be described in relation to encapsulating four conductors, the necklace may be sized and structured to be deployed to encapsulate one or more conductors. In use, the housing is used to string out each apparatus across the conductor span between two towers in a similar known manner to the existing art and in particular as is known when deploying CatchBlocks. With the necklace encapsulating the conductors, a header can be attached to join and pull through the conductor or the multiple conductors in a single operation. Whilst initial slack is applied to the conductors and should a conductor break, the conductors are supported by the necklace. If necessary, the necklace aids the recovery of broken conductors. For instance, the necklace performs a similar operational function to the encapsulating aperture of CatchBlock. But suitably for multiple conductors.

In the broadest form there is therefore provided a necklace attached to the housing. Here, the necklace is a flexible and elongate member supported in a loop between a first and a second attachment point to the housing. At least one of the first and second attachment points is releasable such that the necklace can be attached and detached from the housing. It will be appreciated that the releasable fixing allows the necklace to be deployed in use around the conductors. That is, by detaching the releasable fixing, the housing can be deployed and the necklace arranged to encapsulate the conductors when the releasable fixing is reattached.

As explained, the necklace is a flexible and elongate member and in the exemplary embodiment is suitably formed of a cable and bearing member. The bearing member is arranged to contact the conductors and to act as a separator between the cable and the conductors. Advantageously, by acting as a separator between the cable and conductors, the bearing member reduces the risk of damage between the cable and conductor as the conductors are pulled through the apparatus. Here, the bearing member can be formed of a plurality of bearings arranged on the cable. Preferably, the bearings are arranged to rotate about the cable. For instance, the bearings have a central axis. Here, the bearings are arranged on the cable to rotate about the central axis. Suitably, the bearings include an aperture on the central axis and the bearings are arranged on the cable with the cable passing through the apertures. Contact between the aperture and the cable allows the bearings to rotate about the cable. It will be appreciated that suitably the bearings have a bearing surface arranged to contact the conductors. Here, the bearing surface is suitably a circumferential surface such that the bearing surface is a substantially constant distance from the central axis as the roller rotates.

Suitably the bearings have a body defining a bearing surface. As explained, the bearing surface is structured to contact the conductors. Here, the bearing surface can be selected to have a different material characteristic to the cable. For instance, the bearing surface may be sifter or have a lower coefficient of friction to the cable. Suitably, the bearing surface is a plastic. The body may suitably be a hollow structure. Advantageously, the hollow structure reduces the weight of the bearings. When installed in use, reducing the weight of the bearings is advantageous as it reduces the weight of the apparatus that the maintenance workers need to manipulate and also that the conductors etc have to support. Here, a hollow structure includes a central portion of the body being substantially empty such that the body substantially comprises an outer shell. Also, hollow structure includes an outer shell including an inner structure such as an inner portion of the bearing inside the outer shell comprising webs or support structures to provide support and bracing to the outer shell. Yet further, advantageously the outer shell that forms the bearing surface may include perforations in addition to the apertures on the central axis and through which the cable passes. That is, the bearing surface may be continuous such that the shell is substantially solid or the bearing surface may be perforated to provide a discontinuous surface. Advantageously, by including perforations in the shell, the weight of the bearings can be reduced further and moreover, the wind resistance of the bearings is reduced. The outer shell is explained above as being hollow. In embodiments where the outer shell is not hollow such that the bearing is a solid body, the body may include passages through the body such that the solid body is perforated to allow air passages through the body resulting in a perforated outer surface (i.e., perforated outer shell with a solid body having passageways therethrough). When installed in use, reducing wind resistance reduces the movement of the apparatus generated by wind.

In one exemplary embodiment the bearings are rollers that have a cylindrical shape. Here, the rollers have a circular cross section. The circular cross-section is substantially constant along the length of the roller. The apertures on the central axis through which the cable passes are formed on axial end faces.

The axial end faces may be substantially flat. The rollers suitably have an axial length along the central axis. That is, in the embodiments having axial end faces, the axial length is the distance between the axial end faces. Where the end faces are formed to correspond to an end plane of the bearing surface, the axial length is also the length of the bearing surface. Optionally, the axial end faces could be separated a distance less than the length of the bearing surface such that the bearing surface overhangs the end faces. Here, the axial length would be the greater of the two distances and therefore the length of the bearing surface. The axial length may be greater than a distance between a central axis and a bearing surface. That is, in the exemplary embodiments wherein the rollers are cylindrical, the axial length is suitably greater than the diameter of the circular cross-section of the bearing surface. As explained, the necklace forms a loop between two attachment points on the housing. Bearings having an axial length similar or less to the distance between opposed points of the bearing surface across the central axis (i.e., for circular cross-sections, the diameter) may be preferred to prevent the bearings affecting the loop. For instance, if the bearing axial length is larger than a diameter of the cable by a great degree, the loop can become faceted. Consequently, the axial length of the rollers may be less than ten times or less than eight times or less than six times the diameter of the cable. As explained herein, the distance between opposed points of the bearing surface across the central axis (i.e., the diameter of the bearing) may be related to the cable diameter, and therefore the axial length of the rollers may also be related to the distance between opposed points of the bearing surface across the central axis. Here, the axial length may be less than four times or less than three times or less than twice the distance between opposed points of the bearing surface across the central axis. Suitably, the axial length of the bearing may be similar to the distance between opposed points of the bearing surface across the central axis. Moreover, in some exemplary embodiments, the axial length of the rollers may be less than the distance between opposed points of the bearing surface across the central axis.

In a preferred embodiment, the rollers are balls. That is, the bearing surface of the bearings is substantially spherical. Being spherical, the axial length of the bearing is equal to the distance between opposed points of the bearing surface across the central axis. Also, being a continuous spherical surface, the apertures on the central axis through which the cables pass are formed on the same spherical bearing surface. For the avoidance of doubt, as explained above, preferably the balls are hollow and include a perforated bearing surface.

As explained above the bearings, being rollers suitably having a cylindrical shape but preferably a spherical shape, have a distance between opposed points of the bearing surface across the central axis. That is, in the exemplary embodiments having a circular cross-sections, the distance between opposed points of the bearing surface across the central axis is the diameter of the bearings. Whilst the diameter is used herein, it will be appreciated that it is envisaged other cross-sections can be adopted and in which case, diameter is interchangeable with the distance between opposed points of the bearing surface across the central axis. Suitably, a diameter of the bearings is not more than ten times a diameter of the necklace's cable. More preferably, the diameter of the bearings is not more than eight or six or five times a diameter of the necklace's cable. In a preferred embodiment, the diameter of the bearing is suitably around four times a diameter of the necklace's cable. Thus, the diameter of the bearings may be more than twice or more than three times a diameter of the necklace's cable.

In the exemplary embodiments the necklace comprises a cable and bearings as herein explained. The bearings are arranged on the cable along a portion of the cable forming the loop between the first and second attachment points. Suitably, the bearings are restrained on the cable to reduce the free movement of the bearings along the length of cable. Advantageously, the restriction prevents the bearings from separating under the weight of the conductors. For instance, if a conductor rests on a junction between two bearings, the conductor could urge the bearings to separate and come into contact with the cable. The bearings could be restrained by selecting a number of bearings to substantially fill the loop between the two attachment points. That is, the length of cable between the two attachment points may be substantially similar to the sum of the axial lengths of the bearings arranged on the cable. However, it will be appreciate that some separation of adjacent bearings can be accommodated along the cable, without two adjacent bearings separating sufficient to allow contact between the conductor and cable. Thus, the length of the cable that the bearings are restricted within may in addition to the sum of the bearing's axial lengths include a tolerance, where the tolerance is less than the distance of separation between two bearings that would allow the conductor, in use, to contact the cable.

When the bearings are restrained along the full length of the loop between the first and second attachment points, the end bearings are restrained by abutment between the end bearing and housing, and intermediate bearings abut adjacent bearings.

Alternatively, the number and axial length of the bearings may be selected such that the bearings only extend along a limited portion of the cable. Here, the conductors will not be supported in use by some portions of the cable and therefore providing bearings on these portions can unnecessarily increase the weight of the apparatus. For instance, the bearings may extend between 25% and 75% of the extent of the cable between the two attachment points or between 30% and 70% or between 35% and 65%. Where the bearings are not selected and sized such that the restraint against the movement along the cable is provided by abutment with the housing at the attachment points, stops may suitably be provided on the cable. Stops are mechanically fixed to the cable and sized to be greater than the bearing apertures on the central axis through which the cable passes.

It will be appreciated therefore that the bearings are prevented from moving along the cable by abutment of the bearing with the stops fixed to the cable. Here, the distance between the stops along the cable is substantially similar to the sum of the axial lengths of the number of bearings selected, and preferably including the above discussed tolerance. In one embodiment, the necklace includes intermediate stops along the portion of the cable intended to be protected by the bearings. That is, the bearings can be divided into sub-groups by the intermediate stops. Advantageously, since some movement along the cable is able to be accommodated without adjacent bearings separating sufficiently to allow contact between the cable and conductor, by sub dividing the bearings, each sub-group of bearings can allow the movement tolerance as discussed above. The sub-groups may be singular bearings, or may include two or more bearings and preferably four bearings.

As will be understood, the number of bearings forming the necklace is a plurality determined by the axial length of each bearing. Suitably, each bearing of the plurality of bearings on the cable are substantially the same. But it is envisaged, different sizes or configurations of bearings could be used at different portions of the cable. Moreover, where the selection of the bearings can be determined by relative sizes to the cable diameter or the conductors intended to be captured, the number of bearings in the plurality of bearings on the cable can be determined by these characteristics and the length of cable. However, suitably, the necklace may comprise at least 8 bearings or at least 10 bearings. Suitably, the necklace can comprise at least 15 or in some instances at least 20 bearings.

In the exemplary embodiments, the cable provides the necklace with suitable strength to support the conductors without breaking. That is, during use, the conductors are supported by the necklace and specifically the loop formed by the necklace between the first and second attachment points. Here, the cable is sized and structured such that the tension between the two attachment points does not fracture or comprise the integrity of the cable. Suitably the cable may be a wire cable or other suitable material.

In the exemplary embodiment, the housing provides the first and second attachment points. One or both of the attachment points can be releasable. But it is envisaged that whilst one of the attachment points is releasable to allow the necklace to be released and reattached about the conductors, the other is fixed. The attachment points retain the necklace to the housing. The attachment points can attach the distal ends of the necklace to the housing, for instance by attaching the distal end of the cable to the housing. However, the cable may also pass through the attachment point such that the attachment point to the housing retain the cable from relative movement in at least one direction. Here, as well as forming a loop between the two attachment points, the cable can extend about the housing such that the distal ends of the cable are joined to form a full loop. Here, the cable can be released by releasing the two ends of the cable. When released the releasable attachment point allows the cable to be removed from the housing to encapsulate (loop around) the conductors before restoring the releasable attachment point and rejoining the ends of the cable.

As will be appreciated, the housing provides the first and second attachment points to which the necklace is restrained. The housing allows deployment of the apparatus for maintenance of the OHL equipment and specifically the replacement of conductors. In some exemplary embodiments, the housing includes a sledge. Here, the sledge forms a lower portion of the housing and provides the first and second attachment points. The sledge is an elongate structure. Ends of the sledge may provide the first and second attachment points. Here, the ends of the sledge are advantageously angled relative to a generally horizontal plane of the apparatus. That is, when deployed in use, the apparatus will have an intended horizontal plane. And the ends of the sledge are angled to this intended horizontal plane.

Suitably a main, central portion of the sledge may be arranged along the intended horizontal plane, and therefore the ends of the sledge would be angled relative to the main, central portion. The ends may be angled upwardly. For instance, the ends may be angled relative to the intended horizontal plane by at least 5° or at least 10° or at least 15°. Advantageously, angling the attachment points upwardly urges the cable to form a wider loop than the width (distance between) the attachment points. That is, by causing the cable to extend from the housing at an angle between the intended horizontal and vertical plane, the loop generated has a wider width than if the cable extends from the housing at an intended vertical angle. As will be appreciated, the attachment points can therefore be configured to cause the cable to extend from the housing at an angle to the vertical, and for instance at an angle of least 5° or at least 10° or at least 15° to the vertical.

In some exemplary embodiments, the housing comprises a frame. The frame couples a first CatchBlock and a second CatchBlock. Here, each CatchBlock can be configured to capture a conductor. The necklace subsequently captures third and preferably (when pulling through four conductors) a third and fourth conductor. Here, as well as the first and second CtachBlocks, the frame may also couple a sledge as described herein. The sledge being arranged beneath both CatchBlocks. However, other housings are envisaged. And in particular, the necklace can be configured to capture all the conductors, wherein the housing is configured to be deployed above the conductors.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:

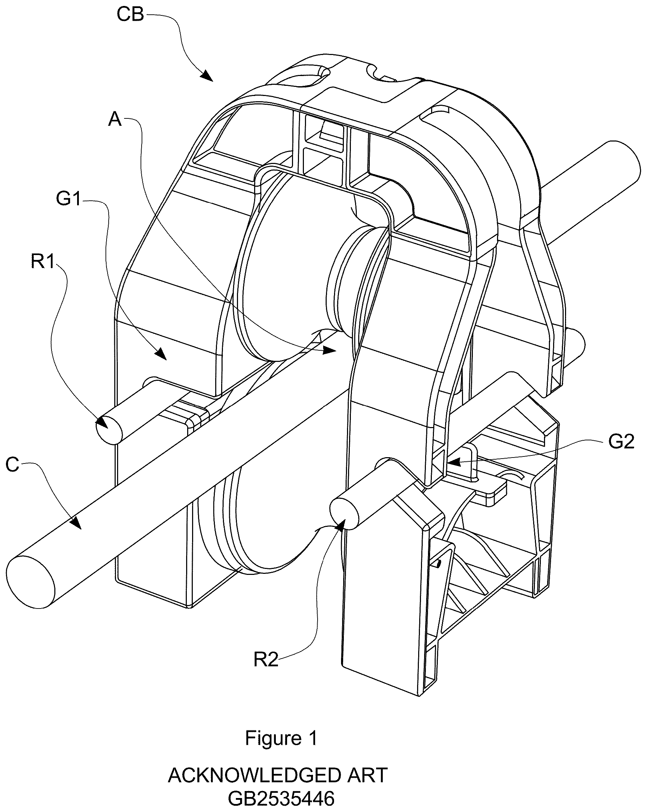

**Figure 1** shows an exemplary CatchBlock of the acknowledged art;
**Figure 2** shows CatchBlocks strung between two towers in use;
**Figure 3** shows an exemplary apparatus for OHL maintenance;
**Figure 4** shows an alternative exemplary apparatus;
**Figure 5** shows a further alternative exemplary apparatus;
**Figure 6** shows an exemplary necklace for the apparatus of Figures 3-5;
**Figure 7** shows a single bearing attached to a cable as part of the exemplary necklace of Figure 6;
**Figure 8** shows an alternative exemplary necklace for the apparatus of Figure 3-5;
**Figure 9** shows an alternative exemplary necklace for the apparatus of Figure 3-5; and
**Figure 10** shows an attachment point for the apparatus of Figure 3;

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

Herein an apparatus is disclosed that is structured to and intended for use in completing maintenance and specifically conductor replacement operations in overhead line (OHL) equipment. It will be appreciated from the acknowledged art that during use, such apparatuses have an intended orientation on the OHL equipment where the apparatus is intended, in ideal conditions, to be arranged in a predetermined condition. Specifically, the predetermined condition may have reference to the horizontal and vertical, wherein such references, although relative, provide the skilled reader with understood datums, without requiring the apparatus to necessarily be orientated. Moreover, references to relative terms such as upper and lower, or width / sides will also be readily understood herein to references to the intended orientation / predetermined ideal installation condition.

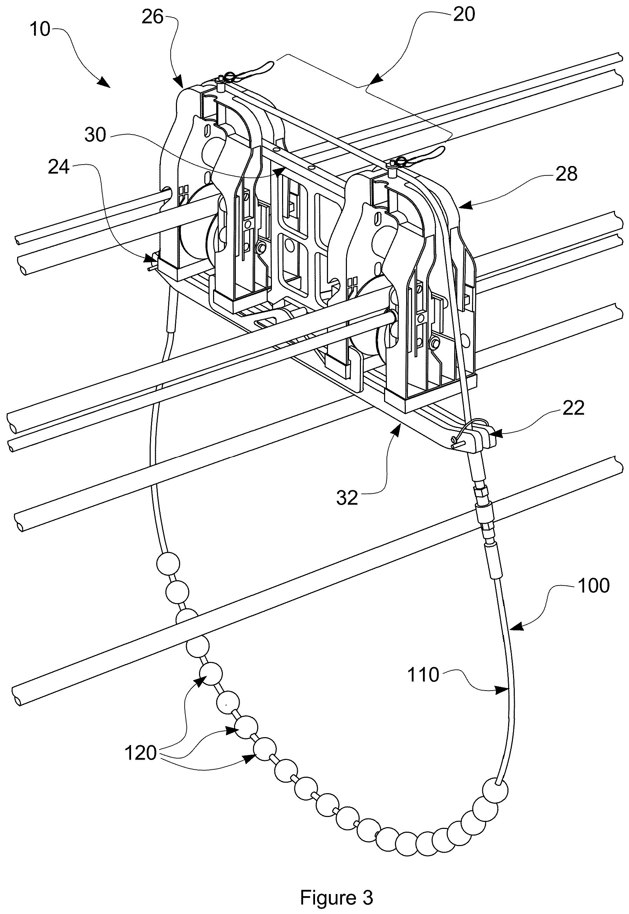

Figure 3 shows an exemplary embodiment of an apparatus 10 for OHL maintenance and in particular, an apparatus 10 for OHL conductor replacement. The apparatus 10 comprises a housing 20 and a necklace 100. The housing includes a first attachment point 22 and a second attachment point 24. The necklace 100 is restrained at the first and second attachment points. The necklace 100 is explained in greater detail below. A brief explanation of the housing is provided herein, however, it will be appreciated that various housings can be adopted to achieve the same effect of being specifically adapted for deployment of the necklace and in particular, in addition to the first and second attachment points, the housing is specifically adapted for use as an apparatus for the maintenance or replacement of OHL conductors.

The housing 20 is shown by way of examples as a first CatchBlock 26 and a second CatchBlock 28. As explained herein, CatchBlock is a trade name for a known apparatus for replacing a conductor as described in GB2535446. A detailed description of the CatchBlock is not given here. Rather, for an understanding of the CatchBlock and general operation, the reader is directed to GB2535446 and the structure of CatchBlock is hereby incorporated by reference to GB2535446 which is fully published. The first and second CatchBlocks are coupled together by a frame 30. The frame 30 is structured to secure the two CatchBlocks to be an integral unit, and it will be appreciated that the frame and CatchBlocks could equally be manufactured as a single unit. The frame is further shown as securing a sledge 32. The sledge 32 is shown as an elongate member forming a bottom of the housing. That is, in use, the apparatus has a generally normal intended orientation when deployed, and references to top, bottom, horizontal and vertical and the like are references to the intended orientation of the apparatus is use.

Still referring to Figure 3, suitably the first and second attachment points 22, 24 are shown as being formed by the distal ends of the sledge. The attachment points retain the necklace. As shown, the attachment points suitably retain the necklace so that the necklace projects from the sledge at an angle to the vertical. That is, at an angle between the vertical and horizontal, such that the inherent stiffness of the necklace urges the necklace to extend outwardly from the sledge. Here, the loop formed by the necklace between the two attachment points has a wider aspect than when the necklace is caused to extend vertically from the sledge. The necklace is configured to encapsulate multiple conductors (shown in the figures as at least two conductors). Thus, the apparatus is sized accordingly.

In the exemplary embodiments, the necklace 100 comprises a cable 110 and a plurality of bearings 120. The bearings 120 are provided to prevent contact between the cable and the conductor that can cause damage to one or both via, for example, abrasion when the conductor is supported by the necklace and moves relative thereto.

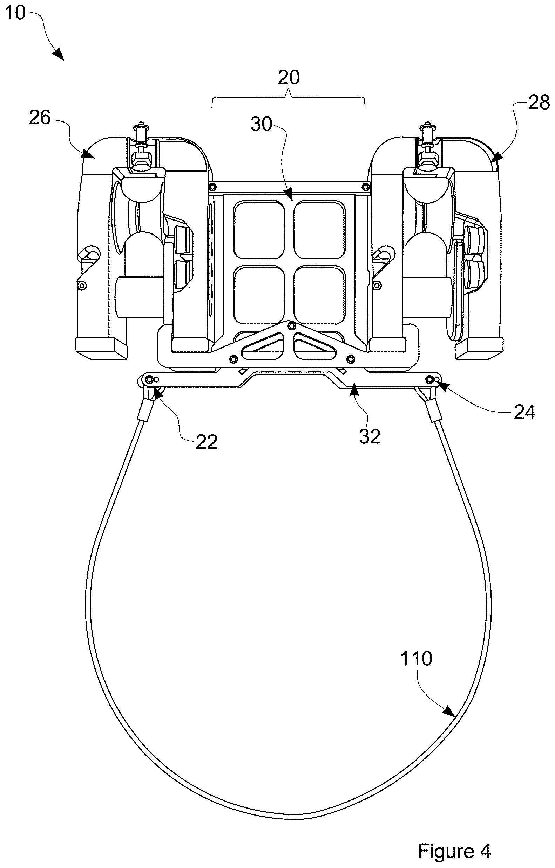

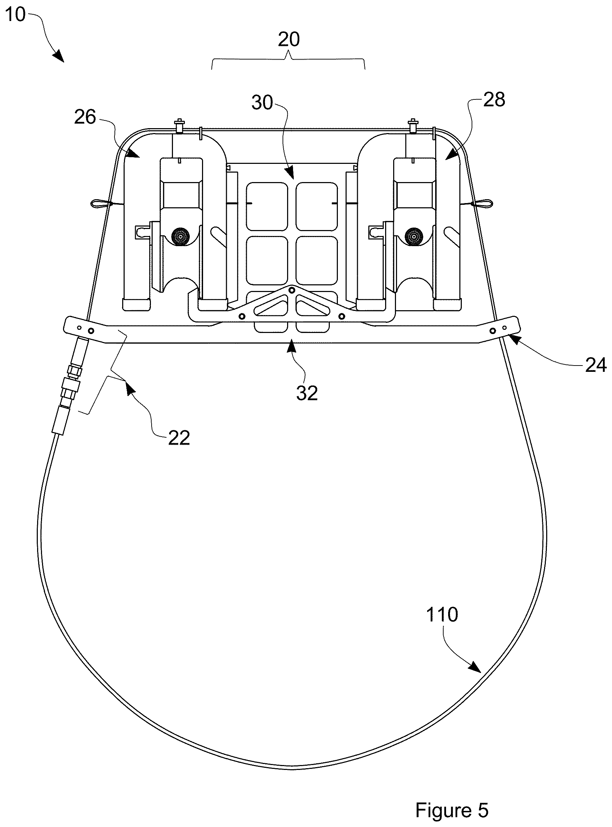

Figures 4 and 5 show alternative configurations of an exemplary apparatus 10 having a sledge 32. As explained above, both figures show a housing 20 with the first 22 and second 24 attachment points. Moreover, both show the attachment points as part of the sledge 32 forming the housing 20. As explained above, by way of explanation, both figures show the housing 20 also optionally comprising first 26 and second 28 CatchBlocks secured together by a frame 30. In Figures 4 and 5, the sledge 32 is shown as an elongate member arranged at the lower portion of the housing 20, where the first and second attachment points are shown at the distal ends of the sledge. As will be appreciated, the necklace comprises a cable 110 and bearings (the plurality of bearings are not shown in Figures 4 and 5).

In Figure 4, the sledge 32 is shown as a substantially planar member. That is, in particular the distal ends of the sledge are shown as extending substantially horizontally. In contrast, in Figure 5, the sledge distal ends are shown as extending at an angle to the horizontal. Here, the angle is measured as the substantive extension of the distal ends upwards from the horizontal as shown by angle X. In Figure 4, the attachment points between the housing and the necklace are shown suitably as a pinned connection, wherein the ends of the cable 110 are formed into eyes and the pins extend through the eye. The pins are secured in the sledge. One or both pins can be removed to remove the respective restraint of the attachment point. As shown in Figure 4, the cable has a natural resistance to bending and therefore forms a natural loop such that the cable extends from the housing at an angle to the vertical.

As well as the flared attachment points, Figure 5 differs from Figure 4 further in that the necklace 100 is shown extending around the housing 20. That is, the cable 110 extends in a substantially full loop about the housing. Here, if the cable is restrained at the attachment points so that the cable extends at right angles to the housing, if a straight sledge is used (similar to an extended sledge shown in Figure 4, the cable would be restricted from forming a loop with a waist larger than the distance between the attachment points. Here, by flaring the sledge 32 such that the distal ends are angled to the horizontal, whilst still being restrained to extend from a lower surface of the sledge at right angles, the cable 110 extends at an angle to vertical such that a waist of the loop is wider than the distance between attachment points 22, 24.

As explained, in Figure 4, the distal ends of the necklace (the distal ends of the cable 110) are terminated at the housing 20. Tension in the necklace 100 is therefore resisted by the attachment points 22, 24. As an alternative, in Figure 5, the distal ends of the cable 110 are joined to each other to form a full loop, wherein tension in the necklace is resisted by the cable loop and any additional restraint at the attachment points 22, 24. Here, the ends of the cable 110 are detached to loop the cable in use around conductors. Where the join of the cable ends corresponds to an attachment point, releasing the cable ends also releases the restraint of the attachment point. Where the join of the cable ends is spaced from the attachment points, the restraint of one of the attachment points would also need to be released (for instance removal of the cable from the attachment point) to loop the necklace 100 around the conductors.

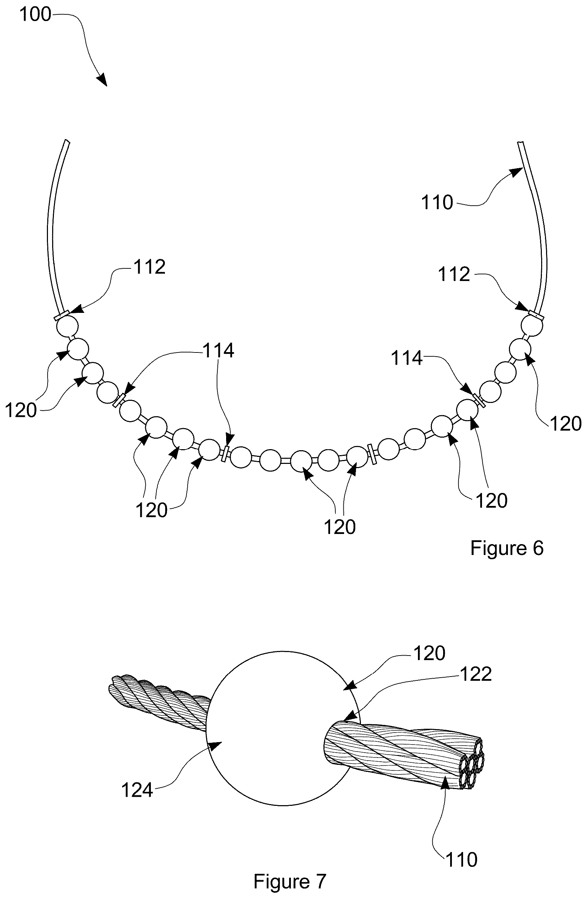

Referring to figure 6, an exemplary necklace is shown comprising a cable 110 and bearings 110. As will be appreciated, the bearings comprise a plurality of bearings, for instance a plurality of rollers. The cable 110 provides the necklace with the strength to function as a support, in use, for the conductors. The cable is suitably a metal wire and has a diameter of approximately 10mm.

End stops 112 are shown on the cable to restrain the bearings 120 within a portion of the length of the cable 110. The portion of the cable is selected so that the bearings are restrained within the end stops 112 and so that adjacent bearings 120 cannot separate sufficiently to allow a conductor to come into contact with the cable 110. The end stops can be crimped ferrules or the like and are structured to prevent movement of the adjacent bearing along the cable. As will be appreciated, this can be by sizing the end stop to be larger than a cable aperture on the bearing and through which the cable passes. As shown in Figure 4 intermediate stops 114 can also be provided between sub-groups of the bearings 120. For instance, as shown, an intermediate stop is provided between each sub-group of four bearings. The end stops 112 and intermediate stops 114 are secured fast to the cable. For instance, the stops can be crimped to the wire so that they grip the wire and prevent movement of adjacent bearings past the stop.

In Figure 6, the necklace is shown as a cable 110 with a plurality of spherical bearings 120. The spherical bearings have cable apertures along an axis of the spherical bearing. The cable is arranged to extend through the cable apertures. Figure 7 shows an exemplary spherical bearing 120. Here, the bearing 120 is substantially solid, with a cable aperture passing along a diameter. As will be appreciated, the bearing 120 therefore has cable aperture 122 on each side and through which the cable 110 passes. A bearing surface 124 is provided by the outer shell of the spherical bearing. The bearing surface 124 is intended to and does contact the conductor in use.

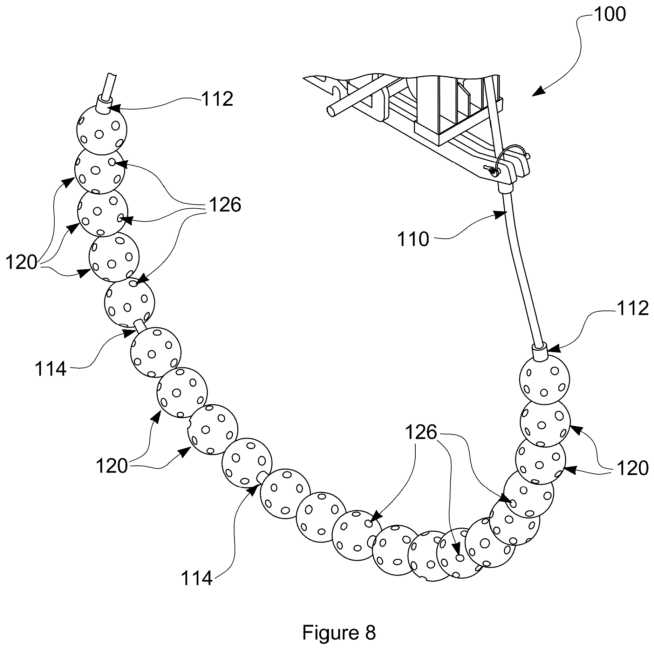

An alternative spherical bearing 120 is shown in Figure 8. Here, rather than being substantially solid, the bearing is perforated. Thus, as shown a plurality of perforated balls 120 are assembled on the cable 110. The bearings are perforated to allow air flow through the bearings. As shown, each bearing therefore comprises a hollow bearing, suitably comprising an outer shell forming a bearing surface 124. That is, the bearing surface 124 is the contact surface intended to contact the conductors. Here, the bearing surface 124 is perforated, that is, non-continuous. Suitably therefore, airflow apertures 126 through the bearing surface are interconnected by the hollow centre of the shell. The spherical bearings 120 are therefore shown as hollow balls having an external shell that forms a bearing surface, wherein the bearing surface (shell) is perforated to include a number of air-flow apertures that are separate to the cable apertures along the diameter.

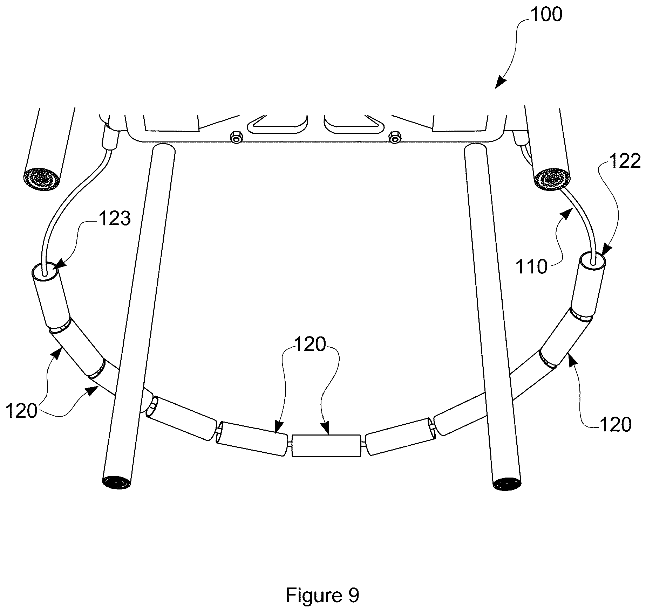

In Figure 9, the necklace 100 is shown as a cable 110 with a plurality of cylindrical bearings 120. The cylindrical bearings have cable apertures 122 along an axis of the cylindrical bearing. That is, the cable apertures are formed in radial faces 123. The cable 110 is arranged to extend through the cable apertures. The cylindrical bearings 120 have an axial length. Suitably, the cable apertures are connected by circumferential wall. The circumferential wall may have a straight axis, such that the cable extends substantially straight between the two cable apertures. Thus, the cable forms a faceted loop.

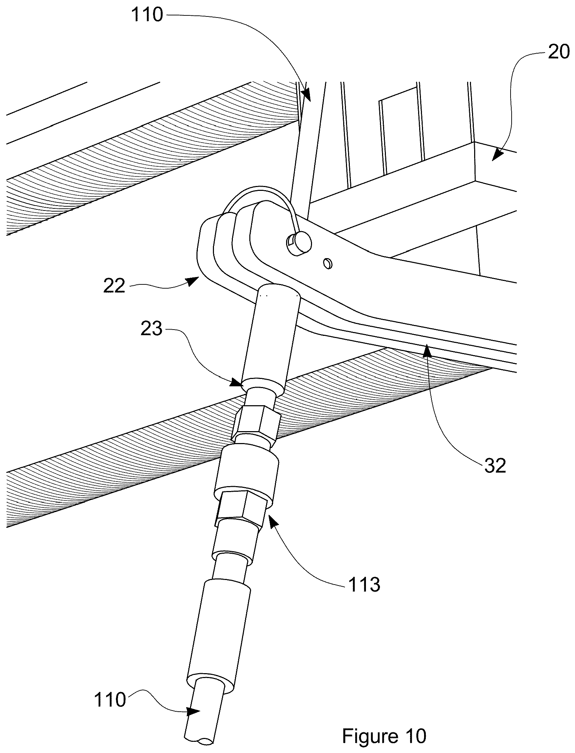

Figure 10 shows an exemplary attachment point 22, 24. The attachment points retrain the cable 110 to the frame 20. One of the attachment points can be permanent. Such that the cable is intended to remain restrained during use. However, to allow the necklace 100 in use to be mounted around the conductors, one of the attachment points is releasable. For instance, distal ends of the cable can be attached to the frame at the attachment points. Alternatively, the cable may form a full loop about the housing such that distal ends of the cable are attached to each other. The distal ends can be detached and the cable removed from being restrained by one of the attachment points to for a loop around the conductor (between the attachment points) and subsequently the restraint of the attachment point at the releasable attachment reapplied and the two distal ends reconnected. The attachment of the two ends of the cable can be formed at one of the attachment points or at a location spaced from the attachment point. As shown in Figure 10, the attachment point 22 includes a ferrule 23 that extends from the frame 20 (and shown as extending from a flared sledge 32 as discussed above). The ferrule 23 is part of the attachment point and installed on an end of the cable 110. The other end of the cable 110 is attached to the ferrule 23. Suitably the attachment can be a screwed corresponding ferrule 113 or a sprung ferrule or a bayonet type attachment or a combination thereof.

As will be appreciated, in use, the apparatus 10 can be used to replace a conductor. Here, multiple apparatuses 10 are strung out between towers. With the necklace encapsulating a conductor (and preferably two or four conductors), ends of the conductors being replaced and encapsulated the necklace can be connected together and pulled through the apparatuses as is known in the art with the conductors encapsulated by the necklace, being supported by the necklace wherein the bearings prevent damage to the cable during the conductors being pulled through. Yet further, if the necklace becomes damaged, the necklace can be removed from the housing and an undamaged necklace replaced on the housing, without requiring the housing to be replaced.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An OHL apparatus (10) comprising a housing (20) and a necklace (100), the housing (20) having a first attachment point (22) and a second attachment point (24) and wherein the necklace is restrained in a loop between the first and second attachment points; and
the necklace comprises a cable (110) and a plurality of bearings (120).

2. The OHL apparatus (10) of claim 1, wherein at least one bearing (120) comprises a bearing surface, and the bearing surface is configured to rotate about the cable (110)

3. The OHL apparatus (10) of either claim 1 or claim 2, wherein at least one bearing (120) is hollow and comprises an outer shell that forms a bearing surface.

4. The OHL apparatus (10) of any of claims 1 to 3, wherein at least one bearing (120) is perforated.

5. The OHL apparatus (10) of any of claims 1 to 4, wherein at least one bearing (120) is a cylindrical roller.

6. The OHL apparatus (10) of claim 5, wherein an axial length of said cylindrical roller (120) is not more than ten times a diameter of the cable (110).

7. The OHL apparatus (10) of any of claims 1 to 5, wherein at least one bearing (120) is a spherical roller.

8. The OHL apparatus (10) of claim 5, wherein a diameter of said spherical roller (120) is not more than ten times a diameter of the cable (110).

9. The OHL apparatus (10) of any of claims 1 to 8, wherein the plurality of bearings (120) extend a limited portion of the cable (110) loop between the first and second attachment points (22. 24).

10. The OHL apparatus (10) of claim 9, wherein end stops (112) are fixed to the cable (110) at the extents of said limited portion of cable.

11. The OHL apparatus (10) of any of claims 1 to 10, wherein intermediate stops (114) are fixed to the cable (110) at one or more locations between the plurality of bearings (120).

12. The OHL apparatus (10) of any of claims 1 to 11, wherein the cable is configured to extend from the housing at one or both of the first and second attachment points at an angle to vertical.

13. The OHL apparatus (10) of any of claims 1 to 12, wherein the housing (20) comprises a sledge (32), wherein the first and second attachment points are located on ends of the sledge (32).

14. A method of replacing a conductor using the OHL apparatus (10) of any of Claims 1 to 13, the method comprising installing the apparatus (10) by detaching the necklace (100) from the housing (20), looping the necklace around at least one conductor and reattaching the necklace.

15. The method of Claim 14, wherein the method comprises installing second and subsequent OHL apparatus (10) to the same said at least one conductor.
